# EUROPEAN PATENT SPECIFICATION

(11) **EP 2 808 098 B1**
(45) Date of publication and mention of the grant of the patent: **10.10.2018**
(21) Application number: 14170132.6
(22) Date of filing: 27.05.2014
(51) Int. Cl.: B08B 9/08, B08B 9/087, B65G 65/23

(54) **Unit for unloading and cleaning a container of tobacco**
Vorrichtung zum Entladen und Reinigen eines Tabakbehälters
Unité pour décharger et nettoyer un container de tabac

(30) Priority: 27.05.2013 IT TV20130081
(43) Date of publication of application: 03.12.2014
(73) Proprietor: GARBUIO S.p.A., 31038 Paese (TV) (IT)
(72) Inventor: Favaro, Mansueto,, 31100 TREVISO (IT)
(74) Representative: Bellemo, Matteo

(56) References cited:
- CN-Y- 201 046 868
- FR-A1- 2 777 875

## Description

The present invention relates to a unit for feeding tobacco to at least two unloading stations.

The present invention finds particularly advantageous application in feeding tobacco to a plurality of unloading stations, in particular cigarette packing machines, to which the following description will make explicit reference without any loss of generality.

In the field of tobacco feeding to a plurality of unloading stations, it is known to realize feed units of the type comprising a guide device extending through the unloading stations; and a overturning device, movable along the guide device under the propelling force of an driving device.

The overturning device comprises a horizontal carriage, which is coupled in a sliding manner to the guide device to move through the unloading stations in a substantially horizontal first direction, extends upwards in a substantially vertical second direction and supports a vertical carriage coupled in a sliding manner to the horizontal carriage to perform rectilinear movements in the second direction.

The vertical carriage supports a pair of rotating arms, which are arranged transversally to the first direction and are coupled to the vertical carriage to rotate around a first axis of rotation parallel to the first direction and to move one with respect to the other in the first direction.

The rotating arms are provided with respective gripping members, which are moved by the rotating arms in the first direction between a clamping position and a release position for at least one container for tobacco storage.

In addition, the two gripping members are coupled in a rotating manner to the associated rotating arms to rotate, with respect to the associated rotating arms, around a second axis of rotation substantially parallel to the first axis of rotation.

By combining the movements of the horizontal carriage in the first direction with the movements of the vertical carriage in the second direction, the arms rotating around the first axis of rotation and the gripping members rotating around the second axis of rotation, the overturning device is designed to receive at least one container in input, to overturn the container and tip the tobacco housed in the container into one of the unloading stations and to release the empty container in output.

Since the overturning of the container is unable to ensure complete and correct emptying and that tobacco could at least partially adhere to the side and bottom walls of the container, the inner space of the container is cleaned by a cleaning device, movable with respect to the overturning device to and from an operating position, in which the cleaning device cleans the inner space of the container while the container is held by the overturning device.

CN201046868 discloses a tobacco feed unit according to the preamble of claim 1.

Known tobacco feed units of the above-described type have a few drawbacks, mainly deriving from the fact that the cleaning device is movable between the unloading stations along a further guide device and under the propelling force of a further actuation device and that, in consequence, these feed units are relatively complex and expensive.

The object of the present invention is to provide a unit for feeding tobacco to at least two unloading stations that is devoid of the above-described drawbacks and which is simple and inexpensive to implement.

According to the present invention, a unit for feeding tobacco to at least two unloading stations is provided as claimed in the appended claims.

The present invention will now be described with reference to the attached drawings, which illustrate a non-limitative embodiment, where:
Figures 1 to 6 are six perspective views, with parts removed for clarity, of a preferred embodiment of the feed unit of the present invention shown in six different operating positions; and
Figure 7 is a schematic side view, with parts removed for clarity, of a detail of the feed unit in Figures 1 to 6.

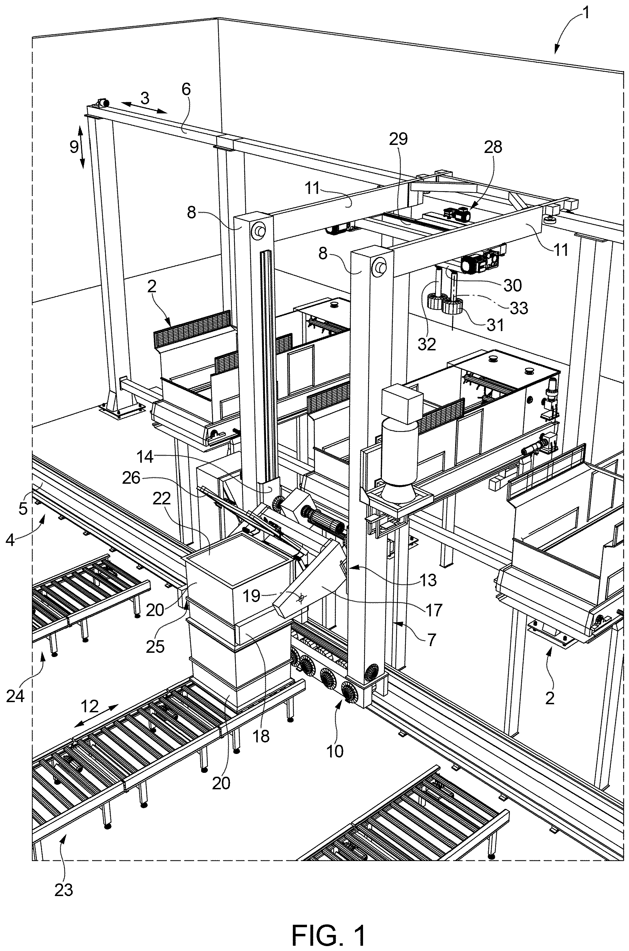

With reference to Figures 1 to 6, reference numeral 1 indicates, as a whole, a unit for feeding tobacco to at least two unloading stations 2, such as cigarette packing machines for example.

In the case in point, the unit 1 is designed to feed tobacco to a plurality of unloading stations 2 placed side by side to one another in a horizontal direction 3, in this case a substantially straight direction 3.

The unit 1 comprises a guide device 4, which extends through the unloading stations 2 in direction 3 and comprises, in turn, two guide rails 5 and 6 parallel to one another, of which rail 5 is a lower rail fastened, for example, to the ground and rail 6 is an upper rail mounted at a certain height from the ground.

The unit 1 further comprises a horizontal carriage 7, which has an L-shape with the concavity facing downwards and is coupled in a sliding manner to the rails 5 and 6 in order to effect rectilinear movements along the guide device 4 in direction 3 under the propelling force of a driving device (not shown).

The carriage 7 comprises two vertical uprights 8, parallel to one another and which extend upwards from rail 5 in a direction 9 transversal to direction 3 and are coupled in a sliding manner to rail 5 by means of a set of wheels 10 mounted between the uprights 8.

At its free end, each upright 8 carries a horizontal crossbeam 11, which extends in a direction 12 orthogonal to directions 3 and 9, and is coupled in a sliding manner to rail 6.

The unit 1 further comprises a overturning device 13 provided with a vertical carriage 14, which extends between the uprights 8 in direction 3 and is coupled in a sliding manner to the uprights 8 to effect rectilinear movements along the uprights 8 in direction 9.

The carriage 14 supports a transmission shaft 15, which extends in direction 3 and is coupled in rotatable manner to the carriage 14 to rotate, with respect to the same carriage 14, around its longitudinal axis 16 parallel to direction 3.

Two rotating arms 17 are coupled to the shaft 15 in an angularly fixed and axially sliding manner; these two arms 17 are parallel to one another, project from the shaft 15 transversally to axis 16, are turned by shaft 15 around axis 16 and are movable one with respect to the other along the shaft 15 in direction 3.

Each arm 17 supports a motorized gripping member 18 facing the gripping member 18 of the other arm 17 in direction 3.

The two gripping members 18 are coupled in rotatable manner with respect to the arms 17 to turn, with respect to the associated arms 17, around an axis 19 of rotation parallel to axis 16 and in direction 3, and are moved by the arms 17 in direction 3 between a clamping position and a release position for a parallelepipedal container 20, which is delimited by a bottom wall 21 and has an opening 22 opposite to the bottom wall 21.

The containers 20 full of tobacco are fed to the overturning device 13 by means of at least one input conveyor 23, an input roller conveyor for example, mounted on the opposite side of the unloading stations 2 with respect to rail 5 in direction 12.

The empty containers 20 are released by the overturning device 13 onto at least one output conveyor 24, an output roller conveyor for example, mounted on the opposite side of the unloading stations 2 with respect to rail 5 in direction 12.

The full containers 20 are transferred by the input conveyor 23 individually and in succession or laid on top of each other in stacks of containers 20; similarly, the empty containers 20 are transferred by the output conveyor 24 individually and in succession or laid on top of each other in stacks of containers 20.

In use, the overturning device 13 receives a container 20 in input, this being picked up from the input conveyor 23 and housed inside a pocket 25 defined by the displacement of the gripping members 18 to their clamping position and by the displacement of a lid 26 carried by the overturning device 13 to a position of closing the opening 22 (Figure 1).

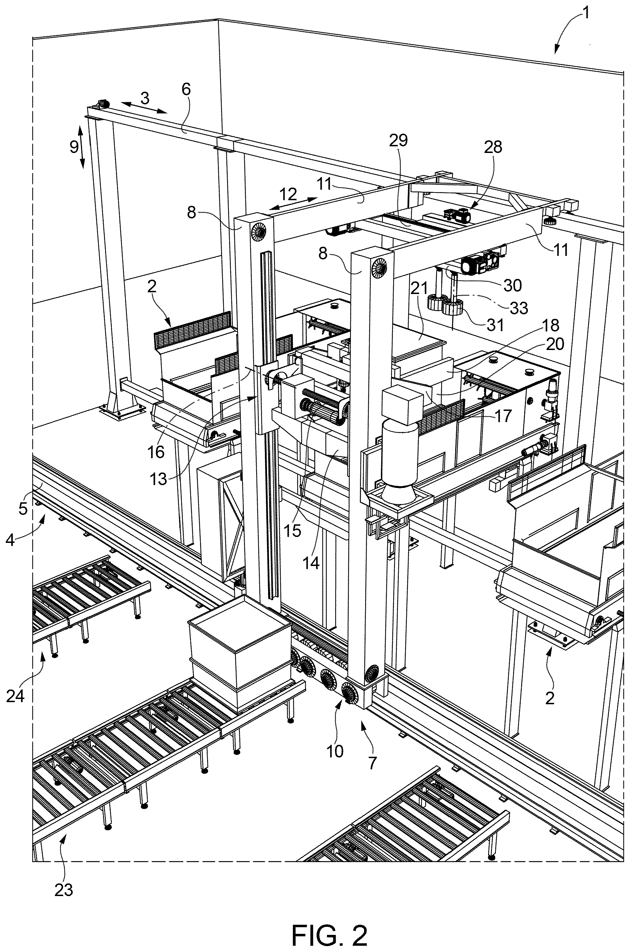

At this point, by combining the movements of the horizontal carriage 7 in direction 3 with the movements of the vertical carriage 14 in direction 9, the arms 17 rotating around axis 16 and the gripping members 18 rotating around axis 19, the container 20 considered is overturned above one of the unloading stations 2 with the lid 26 arranged beneath the bottom wall 21 (Figure 2).

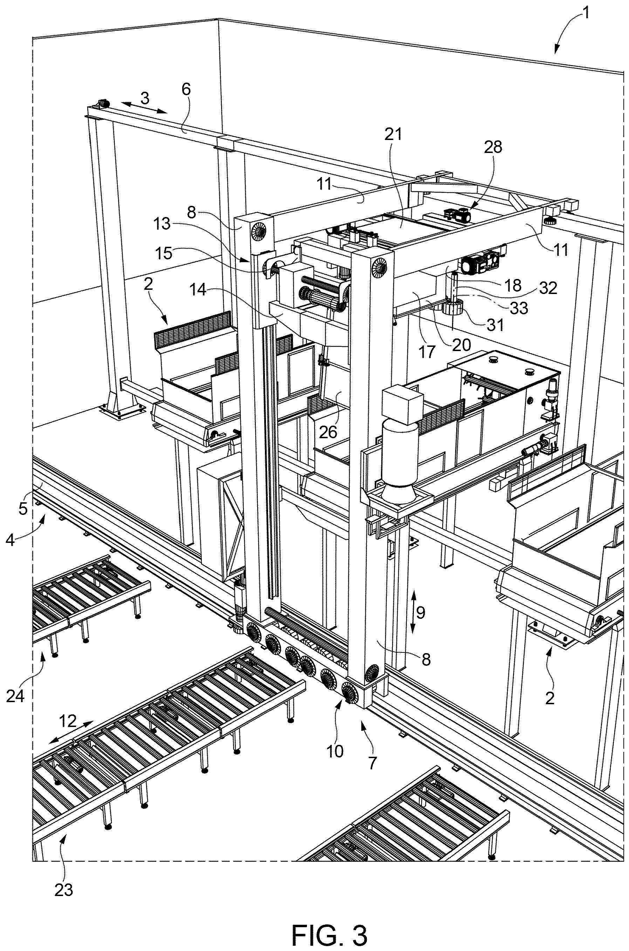

Then, the lid 26 is opened and the tobacco is tipped through the opening 22 into the unloading station 2 considered (Figure 3) .

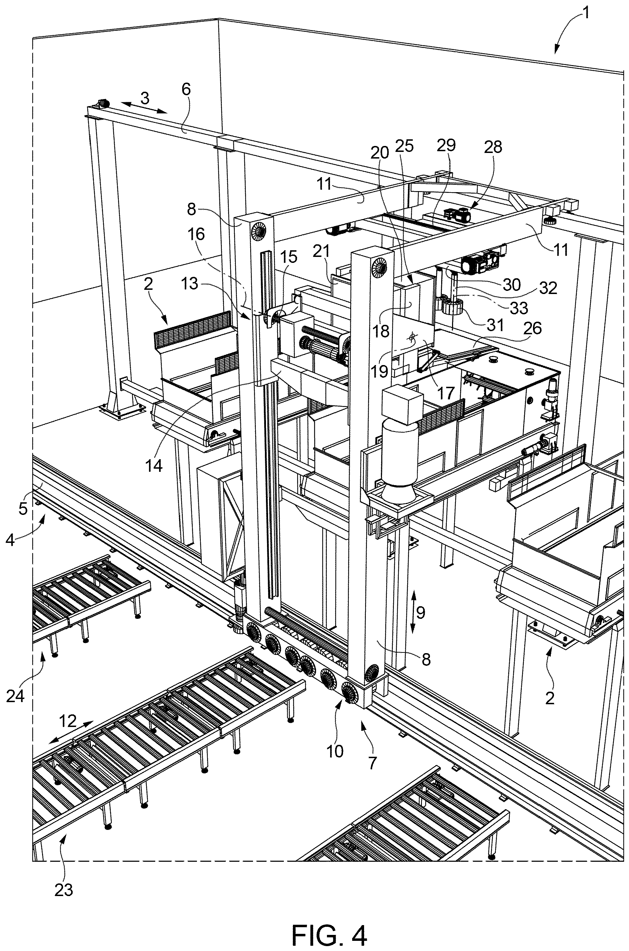

Once the unloading of the tobacco into the unloading station 2 is completed, the container 20 is rotated by an angle of substantially 90°, with the bottom wall 21 arranged perpendicularly to direction 12 to enable a cleaning device 28 to clean an inner space of the container 20 (Figure 4).

The cleaning device 28 is mounted on the horizontal carriage 7 and comprises an elongated support bar 29, which extends between the cross-beams 11 in direction 3, and is, in the case in point, fastened to the cross-beams 11.

According to a not-shown variant, the support bar 29 is coupled in a sliding manner to the cross-beams 11 to effect rectilinear movements along the cross-beams 11 in direction 12.

The support bar 29 supports a slide 30 coupled in sliding manner to the bar 29 to perform, with respect to the bar 29, rectilinear movements in direction 3.

Two rotating brushes 31 are mounted on the slide 30, each of which is fitted on a support shaft 32 mounted to rotate, with respect to the slide 30, around an axis 33 of rotation parallel to the axis 33 of rotation of the other brush 31.

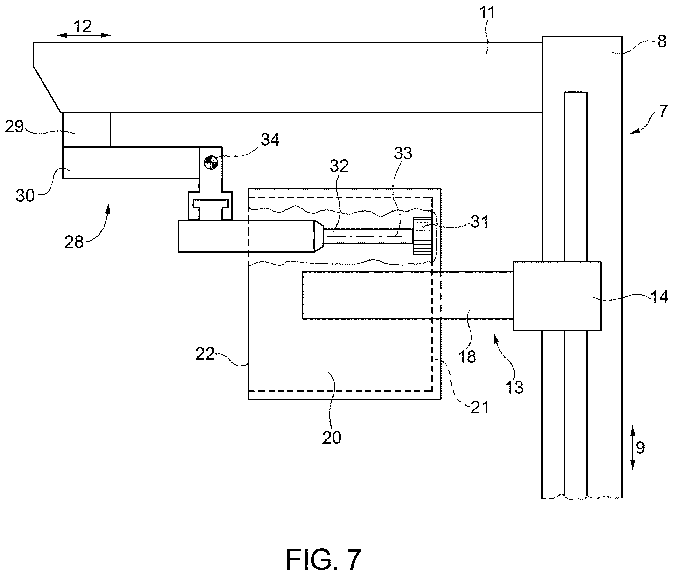

The support shafts 32 are coupled in rotating manner to the slide 30 to oscillate, with respect to the slide 30, around an axis 34 of rotation parallel to direction 3 between a rest position (Figure 1), in which the brushes 31 are arranged with the associated axes 33 parallel to direction 9, and an operating position, in which the brushes 31 are arranged with the associated axes 33 parallel to direction 12 (Figure 7).

The cleaning of the inner space of the container 20 is then carried out by moving the brushes 31 into their operating position, by driving the shafts 32 into rotation around the associated axes 33, and by combining the movements of the vertical carriage 14 in direction 9 with the movements of the arms 17 rotating around axis 16, the gripping members 18 rotating around axis 19 and the slide 30 moving in direction 3 (Figure 7).

According to a not-shown variant, the slide 30 is eliminated and the inner space of the container 20 is cleaned by a plurality of brushes 31 sufficient to cover the entire width of the container 20.

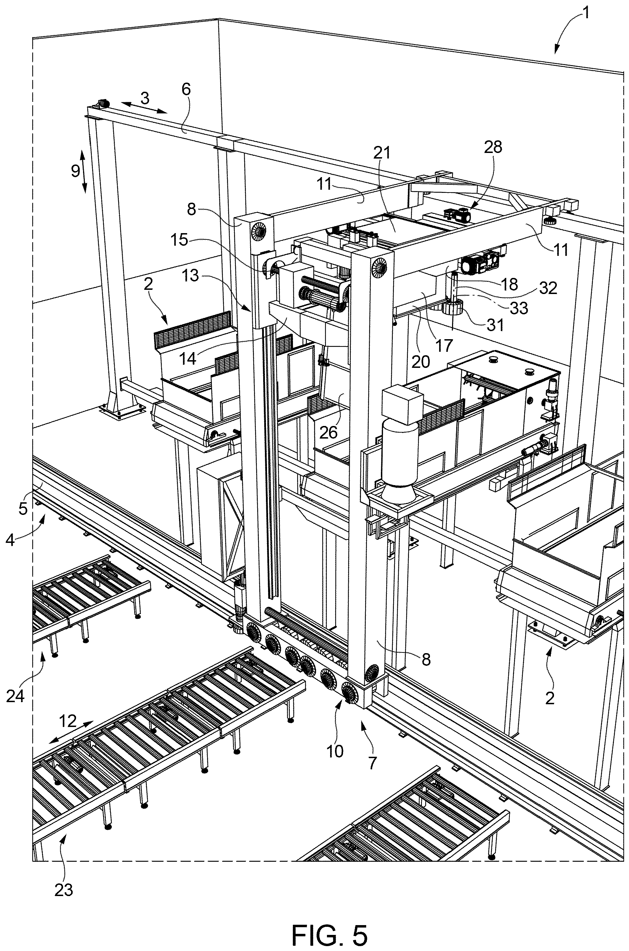

Once cleaning of the container 20 is completed, the brushes 31 are moved clear of the container 20, which is then overturned again to tip the tobacco freed from the inner surfaces of the container 20 by the action of the brushes 31 into the unloading station 2 considered (Figure 5).

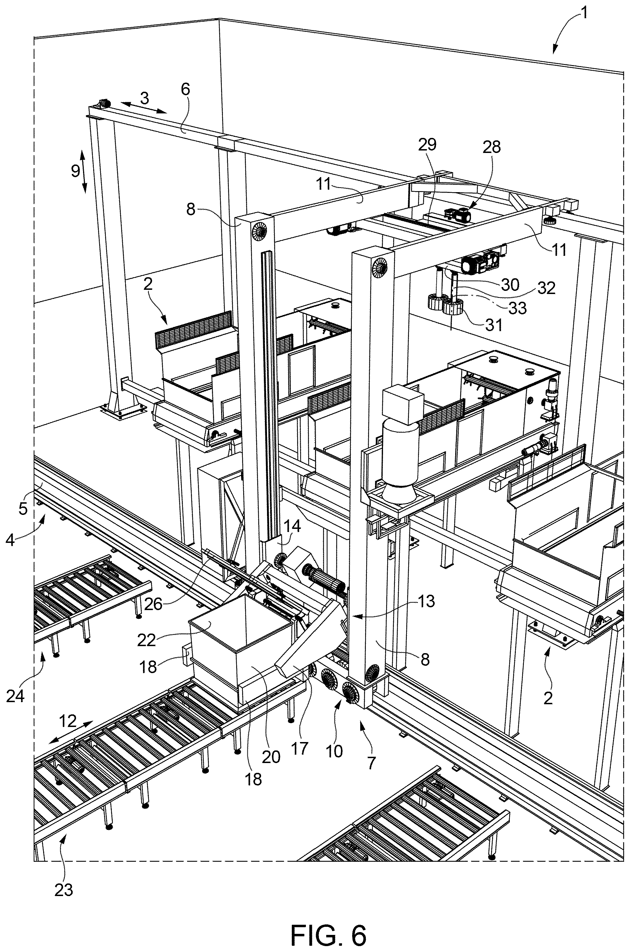

Finally, the empty container 20 is released by the overturning device 13 onto the output conveyor 24 (Figure 6).

According to some not-shown variants:
the overturning device 13 is designed to simultaneously overturn at least two containers 20 into one or more unloading stations 2;
the brushes 31 are always arranged in their operating position;
the brushes 31 are eliminated and replaced with a compressed-air pneumatic device and/or with a rotating mechanical device connected to a compressed-air system.

Since the overturning device 13 and the cleaning device 28 are both mounted on the carriage 7 and are consequently moved along a single guide device, namely guide device 4, and under the propelling force of a single driving device (not shown), the unit 1 is relatively simple and inexpensive.

## Claims

1. A unit for feeding tobacco to at least two unloading stations (2), the unit comprising: a single carriage (7) movable between the unloading stations (2); an overturning device (13) mounted on the carriage (7) and designed to receive at least one container (20) in input, to overturn the container (20) and tip the tobacco housed in the container (20) into at least one of the unloading stations (2), and to release the empty container (20) in output; and a cleaning device (28) to clean an inner space of the container (20);
the overturning device (13) and the cleaning device (28) being movable with respect to one another from and to an operating position, in which the cleaning device (28) cleans the inner space of the container (20) while the container (20) is being held by the overturning device (13);
said unit for feeding tobacco being **characterized in that** the cleaning device (28) is mounted on the carriage (7).

2. A unit according to claim 1, wherein the carriage (7) is L-shaped with the concavity facing downwards.

3. A unit according to claim 1 or 2 and further comprising a single driving device for moving the carriage (7) and, consequently, the overturning device (13) and the cleaning device (28), between the unloading stations (2).

4. A unit according to any one of the preceding claims and further comprising a guide device (4), which extends between the unloading stations (2) in a first direction (3) and is engaged in a sliding manner by the carriage (7).

5. A unit according to claim 4, wherein the guide device (4) comprises a lower rail (5) and an upper rail (6) parallel to one another and to the first direction (3); the carriage (7) being coupled in a sliding manner to the lower rail (5) and to the upper rail (6).

6. A unit according to any one of the preceding claims, wherein the overturning device (13) is movable to a position for tipping the tobacco from the container (20) at the unloading station (2).

7. A unit according to claim 6, wherein the overturning device (13) is designed to move between said operating and unloading positions.

8. A unit according to any one of the preceding claims, wherein the cleaning device (28) is designed to be arranged in the inner space of the container (20) when the overturning device (13) and the cleaning device (28) are placed in said operating position.

9. A unit according to any one of the preceding claims, wherein the overturning device (13) and the cleaning device (28), when placed in said operating position, are movable with respect to one another so as to enable the cleaning device (28) to move through the inner space of the container (20).

10. A unit according to any one of the preceding claims, wherein the cleaning device (28) is a brush device and/or a compressed air device.

11. A unit according to any of the preceding claims, wherein the overturning device (13) comprises, for each said container (20), a respective pocket (25) that is able to receive and hold the container (20); the pocket (25) being mounted so as to turn around at least a first axis of rotation (19) and move the container (20) to an unloading position for unloading the tobacco from the container (20) at the unloading station (2).

12. A unit according to claim 11, wherein the overturning device (13) further comprises support means (17) for the pocket (25) that are mounted so as to turn around a second axis of rotation (16) substantially parallel to the first axis of rotation (19); the pocket (25) being movable with respect to the support means (17) around the first axis of rotation (19) .

13. A unit according to claim 12, wherein the support means (17) are movable in at least a second direction (9) substantially straight and transversal to said first and second axes of rotation (19, 16).

## Patentansprüche

1. Eine Vorrichtung zum Fördern von Tabak zu wenigstens zwei Entladestationen (2), wobei die Vorrichtung aufweist: einen einzigen Wagen (7), der zwischen den Entladestationen (2) bewegbar ist; eine Umkippeinrichtung (13), die an dem Wagen (7) befestigt ist und derart ausgebildet ist, dass der Wagen am Einlass wenigstens einen Container (20) aufnimmt und den Container (20) umkippt und den in dem Container enthaltenen Tabak in mindestens einer der Entladestationen (2) ablädt, und den leeren Container (20) am Auslass freigibt; und eine Reinigungseinrichtung (28) zur Reinigung des Innenraums des Containers (20); wobei
die Umkippeinrichtung (13) und die Reinigungseinrichtung (28) gegeneinander und von einer Betriebsposition und in eine Betriebsposition bewegbar sind, in der die Reinigungseinrichtung (28) den Innenraum des Containers (20) reinigt, während der Container (20) von der Umkippeinrichtung (13) gehalten wird;
die Vorrichtung zum Fördern von Tabak **dadurch gekennzeichnet ist, dass** die Reinigungseinrichtung (28) auf dem Wagen (7) befestigt ist.

2. Eine Vorrichtung nach Anspruch 1, wobei der Wagen (7) L-förmig mit einer nach unten weisenden Wölbung ist.

3. Eine Vorrichtung nach Anspruch 1 oder 2 und ferner aufweisend eine einzige Antriebseinrichtung zum Bewegen des Wagens (7) und, folglich, der Umkippeinrichtung (13) und der Reinigungseinrichtung (28), zwischen den Entladestationen (2).

4. Eine Vorrichtung nach einem der vorhergehenden Ansprüche und ferner aufweisend eine Führungseinrichtung (4), die sich zwischen den Entladestationen (2) in eine erste Richtung (3) erstreckt und in einer gleitenden Weise mit dem Wagen (7) in Eingriff ist.

5. Eine Vorrichtung nach Anspruch 4, wobei die Führungseinrichtung (4) eine untere Schiene (5) und eine obere Schiene (6) aufweist, die parallel zueinander und parallel zu der ersten Richtung (3) sind; wobei der Wagen (7) in einer gleitenden Weise an die untere Schiene (5) und die obere Schiene (6) gekoppelt ist.

6. Eine Vorrichtung nach einem der vorhergehenden Ansprüche, wobei die Umkippeinrichtung (13) in eine Position zum Abladen des Tabaks von dem Container (20) an der Entladestation (2) bewegbar ist.

7. Eine Vorrichtung nach Anspruch 6, wobei die Umkippeinrichtung (13) derart ausgebildet ist, dass sich diese zwischen der Betriebsposition und der Endladeposition bewegt.

8. Eine Vorrichtung nach einem der vorhergehenden Ansprüche, wobei die Reinigungseinrichtung (28) derart ausgebildet ist, dass diese in dem Innenraum des Containers (20) angeordnet ist, wenn sich die Umkippeinrichtung (13) und die Reinigungseinrichtung (28) in der Betriebsposition befinden.

9. Eine Vorrichtung nach einem der vorhergehenden Ansprüche, wobei die Umkippeinrichtung (13) und die Reinigungseinrichtung (28), wenn sich diese in der Betriebsposition befinden, so gegeneinander bewegbar sind, dass der Reinigungseinrichtung (28) ermöglicht wird, sich durch den Innenraum des Containers (20) zu bewegen.

10. Eine Vorrichtung nach einem der vorhergehenden Ansprüche, wobei die Reinigungseinrichtung (28) eine Bürsteneinrichtung und/oder eine Drucklufteinrichtung ist.

11. Eine Vorrichtung nach einem der vorhergehenden Ansprüche, wobei die Umkippeinrichtung (13) für jeden Container (20) jeweils ein Fach (25) aufweist, das in der Lage ist, den Container (20) aufzunehmen und zu halten; wobei das Fach (25) derart ausgebildet ist, dass sich dieses um wenigstens eine erste Drehachse (19) dreht und den Container (20) zu einer Entladeposition zum Entladen des Tabaks von dem Container (20) an der Entladestation (2) bewegt.

12. Eine Vorrichtung nach Anspruch 11, wobei die Umkippeinrichtung (13) ferner Befestigungsmittel (17) für das Fach (25) aufweist, die derart befestigt sind, dass sich diese um eine zweite Drehachse (16), die im Wesentlichen parallel zu der ersten Drehachse (19) ist, drehen; wobei das Fach (25) in Bezug auf die Befestigungsmittel (17) um die erste Drehachse bewegbar sind.

13. Eine Vorrichtung nach Anspruch 12, wobei die Befestigungsmittel (17) in wenigstens eine zweite Richtung (9) im Wesentlichen gerade und quer zu der ersten und zweiten Drehachse (19, 16) bewegbar sind.

## Revendications

1. Unité pour l'alimentation en tabac d'au moins deux postes de déchargement (2), l'unité comprenant : un seul chariot (7) mobile entre les postes de déchargement (2) ; un dispositif de renversement (13) monté sur le chariot (7) et conçu pour recevoir au moins un conteneur (20) en entrée, pour renverser le conteneur (20) et verser le tabac logé dans le conteneur (20) dans au moins un des postes de déchargement (2), et pour libérer le conteneur vide (20) en sortie ; et un dispositif de nettoyage (28) pour nettoyer un espace intérieur du conteneur (20) ;
le dispositif de renversement (13) et le dispositif de nettoyage (28) étant mobiles l'un par rapport à l'autre et vers une position opérationnelle, dans laquelle le dispositif de nettoyage (28) nettoie l'espace intérieur du conteneur (20) alors que le conteneur (20) est maintenu par le dispositif de renversement (13) ; ladite unité pour l'alimentation en tabac étant **caractérisée en ce que** le dispositif de nettoyage (28) est monté sur le chariot (7).

2. Unité selon la revendication 1, dans laquelle le chariot (7) est en forme de L avec la concavité tournée vers le bas.

3. Unité selon la revendication 1 ou 2 et comprenant en outre un seul dispositif d'entraînement pour déplacer le chariot (7) et, par conséquent le dispositif de renversement (13) et le dispositif de nettoyage (28), entre les postes de déchargement (2).

4. Unité selon l'une quelconque des revendications précédentes et comprenant en outre un dispositif de guidage (4) qui s'étend entre les postes de déchargement (2) dans une première direction (3) et est en prise de manière coulissante par le chariot (7).

5. Unité selon la revendication 4, dans laquelle le dispositif de guidage (4) comprend un rail inférieur (5) et un rail supérieur (6) parallèles l'un à l'autre et à la première direction (3) ; le chariot (7) étant couplé de manière coulissante au rail inférieur (5) et au rail supérieur (6).

6. Unité selon l'une quelconque des revendications précédentes, dans laquelle le dispositif de renversement (13) est mobile vers une position pour verser le tabac du conteneur (20) au poste de déchargement (2).

7. Unité selon la revendication 6, dans laquelle le dispositif de renversement (13) est conçu pour se déplacer entre lesdites positions opérationnelles et de déchargement.

8. Unité selon l'une quelconque des revendications précédentes, dans laquelle le dispositif de nettoyage (28) est conçu pour être agencé dans l'espace intérieur du conteneur (20) lorsque le dispositif de renversement (13) et le dispositif de nettoyage (28) sont placés dans ladite position opérationnelle.

9. Unité selon l'une quelconque des revendications précédentes, dans laquelle le dispositif de renversement (13) et le dispositif de nettoyage (28), lorsqu'ils sont placés dans ladite position opérationnelle, sont mobiles l'un par rapport à l'autre pour permettre au dispositif de nettoyage (28) de se déplacer au travers de l'espace intérieur du conteneur (20).

10. Unité selon l'une quelconque des revendications précédentes, dans laquelle le dispositif de nettoyage (28) est un dispositif à brosse et/ou un dispositif à air compressé.

11. Unité selon l'une quelconque des revendications précédentes dans laquelle le dispositif de renversement (13) comprend, pour chaque dit conteneur (20), une poche (25) respective qui est apte à recevoir et à maintenir le conteneur (20) ; la poche (25) étant montée de sorte à tourner autour d'au moins un premier axe de rotation (19) et à déplacer le conteneur (20) vers une position de déchargement pour le déchargement du tabac du conteneur (20) au poste de déchargement (2).

12. Unité selon la revendication 11, dans laquelle le dispositif de renversement (13) comprend en outre des moyens de support (17) pour la poche (25) qui sont montés de sorte à tourner autour d'un second axe de rotation (16) sensiblement parallèle au premier axe de rotation (19) ; la poche (25) étant mobile par rapport aux moyens de support (17) autour du premier axe de rotation (19).

13. Unité selon la revendication 12, dans laquelle les moyens de support (17) sont mobiles dans au moins une seconde direction (9) sensiblement droite et transversale auxdits premier et second axes de rotation (19, 16).
